# EUROPÄISCHE PATENTSCHRIFT

(11) **EP 3 497 348 B1**
(45) Veröffentlichungstag und Bekanntmachung des Hinweises auf die Patenterteilung: **16.11.2022**
(21) Anmeldenummer: 17728830.5
(22) Anmeldetag: 08.06.2017
(51) Int. Cl.: F16F 9/04

(54) **LUFTFEDERBALG MIT SELBSTREINIGENDER OBERFLÄCHE**
AIR-SPRING BELLOWS COMPRISING A SELF-CLEANING SURFACE
SOUFFLET PNEUMATIQUE À SURFACE AUTO-NETTOYANTE

(30) Priorität: 15.08.2016 DE 102016215161
(43) Veröffentlichungstag der Anmeldung: 19.06.2019
(73) Patentinhaber: ContiTech Luftfedersysteme GmbH, 30165 Hannover (DE)
(72) Erfinder: GEDENK, Volker, 30966 Hemmingen (DE); KROPF, Andreas, 31275 Lehrte (DE); RITTWEGER, Stefan, 30826 Garbsen (DE)
(74) Vertreter: Continental Corporation
(86) Internationale Anmeldenummer: PCT/EP2017/063971
(87) Internationale Veröffentlichungsnummer: WO 2018/033263

(56) Entgegenhaltungen:
- EP-A1- 1 559 925
- EP-A2- 1 371 872
- DE-A1- 10 007 153

## Beschreibung

Die Erfindung betrifft einen Luftfederbalg aus elastomerem Material, der an seinen Balgenden mit Hilfe von Anschlussteilen, hier also Luftfederdeckel sowie Kolben oder Felge, zwischen gefederter und ungefederter Masse eingespannt ist und beim Ein- bzw. Ausfedern Rollbewegungen z.B. unter Ausbildung einer Rollfalte ausführt und/oder sich an Anschlussteile anlegt, wobei der Luftfederbalg mindestens auf Teilen seiner Außenoberfläche eine von einer im Wesentlichen glatten Oberfläche sich unterscheidende Struktur aufweist.

Das Aufbringen von Strukturen, beispielsweise Rippen, Noppen, Vorsprünge etc. auf die Außenoberfläche von elastomeren Balg-Körpern ist in unterschiedlichen Bereichen des Standes der Technik und aus unterschiedlichen Gründen bekannt.

So offenbart die EP 0 199 952 A1 einen Rollbalg für Fahrzeugluftfederungen, der auf seiner Außenseite mit erhaben angeformten Axialrippen ausgebildet ist, welche als Anstandshalter wirken und ein knickfreies, kontinuierliches Rollen der Rollfalte ermöglichen sollen und auch dazu dienen, den durch Verschmutzung auftretenden Abrieb an der Außenseite eines Luftfederrollbalgs zu vermindern. Dort ist auch offenbart, diese Axialrippen mit Radialrippen oder Querstegen zu verbinden bzw. zu verstärken. Gerade dadurch bilden sich aber insbesondere in den Bereichen, in denen sich der Rollbalg an seine Anschlussteile anlegt oder an ihnen abrollt, Hohlräume in Form von "Taschen", in die sich Schmutz besonders gut ablagern und einpressen kann. Das Dokument DE 100 07 153 A1, welches als der nächstliegende Stand der Technik angesehen wird, offenbart die Merkmale des Oberbegriffs des Anspruchs 1.

Die bisher bekannten Ausbildungen offenbaren Oberflächen mit im Wesentlichen als profilierte Rillen oder Rippen ausgebildeten Strukturen, die verhindern sollen, dass die tragenden Wandteile eines Balgkörpers auf ihrer Außenseite durch Abrieb geschädigt werden können. Die Ausbildung solcher Strukturen, wie sie zum Beispiel in der EP 0 199 952 A1 offenbart sind, verändern aber nachtciligcrwcisc auch die Steifigkeit und damit die Funktion und das Federungsverhalten solcher Balgkörper, was für einen Luftfederbalg nicht gerade gewünscht ist.

Luftfederbälge für Schienenfahrzeuge und LKW sind regelmäßig besonders hohen Belastungen unterworfen. Jeder der Luftfederbälge eines solchen Fahrzeugs ist durch mehrere Tonnen belastet und wird in einem recht rauen Betrieb über viele Jahre eingesetzt, oft mehr als zehn Jahre. Bälge werden radialen Auslenkungen bis zur Hälfte des Balgradius unterworfen. Dazu kommt, dass solche Bauteile zwar periodisch auf Schäden und Funktion geprüft werden, aber ansonsten keiner besonderen Wartung oder Reinigung unterliegen. Gerade aber im Rollfaltenbereich oder an den Auflageflächen bzw. Anlagebereichen der Luftfederbälge kann es vorkommen, dass sich z.B. Sand oder Staub in feuchter Umgebung ablagert oder "anbackt". Dieser feste Belag hat dann eine stark abrasive Wirkung. In erster Linie der Luftfederbalg, aber auch die zur Abstützung oder Anlage der Luftfederbalg-Oberfläche vorgesehenen Metall-oder Kunststoffelemente können dadurch erheblichen Schaden nehmen.

Für die Erfindung bestand also die Aufgabe, einen Luftfederbalg bereitzustellen, der durch die üblicherweise auftretenden Verschmutzungen und deren Nachwirkungen weniger geschädigt werden kann und der dabei in seiner Funktion, d.h. insbesondere in seinem Federungsverhalten, nicht nachteilig beeinflusst wird.

Gelöst wird diese Aufgabe durch die Merkmale des Hauptanspruchs. Weitere vorteilhafte Ausbildungen sind in den Unteransprüchen offenbart.

Dabei enthält die Struktur eine Vielzahl von aus der Oberfläche hervortretenden und über die Außenoberfläche hinweg bogenförmig verlaufenden Rippen, die in ihrer Anordnung zueinander und zur Achse des Luftfederbalges so ausgerichtet sind, dass bei Vorhandensein von Flüssigkeit auf der Außenoberfläche Fließ- oder Strömungsverhältnisse entstehen, durch die an der Außenoberfläche anhaftende Fremdstoffe oder Verschmutzungen durch die Flüssigkeit ausschwemmbar sind. Die bogenförmig verlaufenden Rippen erzeugen dann überraschenderweise auch auf einer Balgoberfläche einen Effekt, der ähnlich wie z,B, bei den Leitblechen in einer Strömung dazu führt, dass ein "wenig turbulenter" Abfluss von Flüssigkeit entsteht, der Verschmutzungen wie Sand oder Staub mit sich führt und ausschwemmt.

Damit wird sogar auf der Balgoberfläche abgelagerter und nach Trocknung ggf. angebackener Sand oder Staub durch die im Laufe der Zeit auch immer wieder auftretende Flüssigkeit auf der Balgüberfläche, z. B. Regenwasser, ohne weiteres ausgeschwemmt. Die Lebensdauer und die Langzeit-Belastbarkeit eines solchen Luftfederbalgs werden dadurch wesentlich erhöht.

Eine erfindungsgemäße Weiterbildung besteht darin, dass die bogenförmig verlaufenden Rippen gleichsinnig ausgerichtet und nebeneinander liegend Kanalquerschnitte bilden, wobei die Rippen und damit die Kanalquerschnitte sich bogenförmig geneigt zur Umfangsrichtung des Luftfederbalgs erstrecken, und einen Neigungswinkel von 30° bis 60° aufweisen zwischen der Tangente an einen jeweiligen Bogen und der Umfangsrichtung. Die Umfangsrichtung wird hier durch diejenigen Tangenten an die Außenoberfläche des Balgs festgelegt, die senkrecht zur Balgachse stehen. Eine solche Ausbildung verstärkt den oben genannten Reinigungseffekt.

Eine weitere vorteilhafte Ausbildung besteht darin, dass die bogenförmig verlaufenden Rippen Unterbrechungen aufweisen, insbesondere kreuzende Rillen, die mehrere nebeneinander liegende Kanalquerschnitte miteinander verbinden. Eine solche Ausbildung ergibt Vorteile in Bezug auf eine gute Entlüftung der Bälge in der Vulkanisationsform. Bei einem Herstellungsverfahren, bei dem die bogenförmig verlaufenden Rippen während der Vulkanisation des Balgkörpers in eine entsprechende Außenform ausgebildet/ausgeformt werden, ist es wesentlich, dass für eine ausreichende Entlüftung gesorgt wird, damit sich die Rippen vollständig ausformen können. Die erfindungsgemäß vorgesehenen Unterbrechungen lassen dies auf einfache Weise möglich werden.

Eine weitere vorteilhafte Ausbildung besteht darin, dass die bogenförmig verlaufenden Rippen abhängig von ihrer Position auf der Außenoberfläche des Luftfederbalgs eine unterschiedliche Breite und/oder Höhe aufweisen. Auf diese Weise können die oben beschriebene Reinigungseffekte bzw. das Ausschwemmen in bestimmten Balgbereichen verstärkt werden. Welche Bereiche ausgewählt werden für solche Maßnahmen, ergibt sich aus Erfahrungswerten bei der Verschleißbeobachtung von Bälgen aus dem Stand der Technik. Dies sind insbesondere die Rollfaltenbereiche bzw. die Anlagebereiche von Luftfedern an Anschlussteile.

Eine weitere vorteilhafte Ausbildung besteht darin, dass die bogenförmig verlaufenden Rippen vorzugsweise eine Breite 0,5 bis 2 mm und eine Höhe von 0,3 bis 1,5 mm aufweisen. Es hat sich gezeigt, dass mit solchen Bemaßungen einerseits eine sichere Ausformung bei der Vulkanisation und andererseits ein besonders guter Reinigungseffekt vorhanden ist.

Eine weitere erfindungsgemäße Ausbildung besteht darin, insbesondere bei einem so genannten "Halbbalg" für Fahrwerke von Schienenfahrzeugen , dass die bogenförmig verlaufenden Rippen im Bereich der Anlage des Balgs an die Anschlussteile angeordnet sind und der Luftfederbalg in einem im Wesentlichen im Zenit des Balgs befindlichen Bereich von Rippen frei ist. In den Bereichen der Anlage des Balgs an die Anschlussteile, also beispielsweise im Rollbereich an der Felge oder am Kolben ist das Auftreten von Verschmutzungen besonders häufig zu verzeichnen und kann dort schädigende Wirkungen entfalten. Demzufolge ist es günstig, die Rippenprofile um die oberen und unteren Balgwölbungen verlaufen zu lassen und den Mittelbereich als glatte Oberfläche zu belassen.

Der erfindungsgemäße Luftfederbalg lässt sich, wie oben bereits dargestellt, in besonders vorteilhafter Weise für die Luftfederung von Schienenfahrzeugen oder Lastkraftwagen verwenden.

Anhand eines Ausführungsbeispiels soll die Erfindung näher erläutert werden. Es zeigen
- Fig. 1: den vorderen Teil eines schienengebundenen Kurzstreckentriebwagens als Prinzipskizze,
- Fig. 2: eine Ansicht eines erfindungsgemäßen Luftfederbalgs,
- Fig. 3: einen Schnitt durch einen erfindungsgemäßen Luftfederbalg gemäß Fig. 2,
- Fig. 4: den erfindungsgemäßen Luftfederbalg der Fig. 2 und 3 in einer Ansicht von unten,
- Fig. 5: einen Luftfederbalg mit glatter Oberfläche aus dem Stand der Technik.

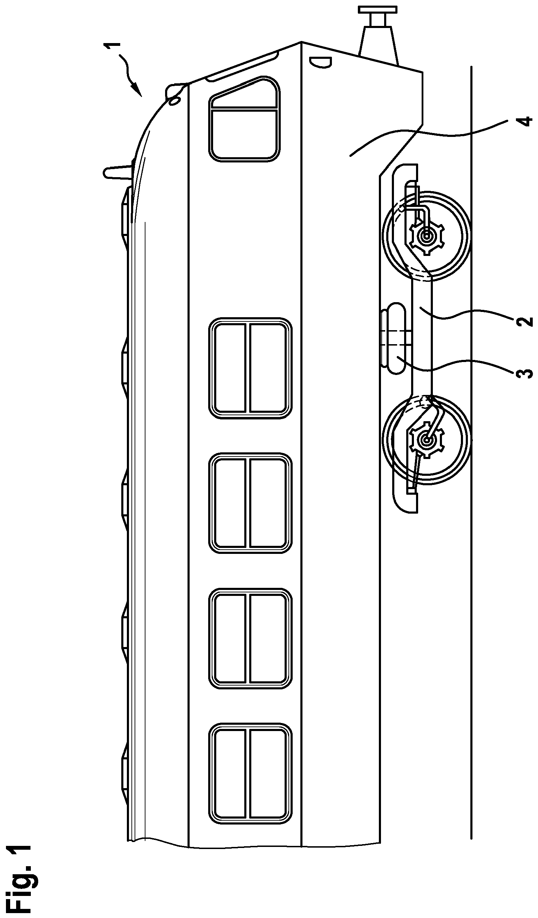

Fig. 1 zeigt prinzipiell den vorderen Teil eines Schienenfahrzeuges, nämlich eines schienengebundenen Kurzstreckentriebwagens 1 mit einen Fahrschemel bzw. Fahrgestell 2. Der Kurzstreckentriebwagen ist mit einem luftgefederten Fahrwerk versehen, bei dem der Fahrschemel u.a. über einen Luftfederbalg 3, eine so genannten Halbbalg, mit der Karosserie 4 des Triebwagens 1 verbunden ist.

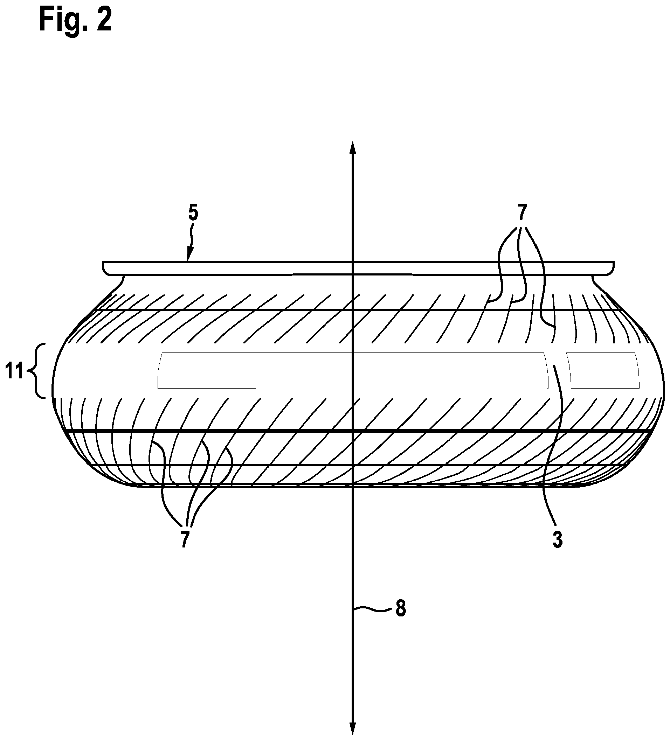

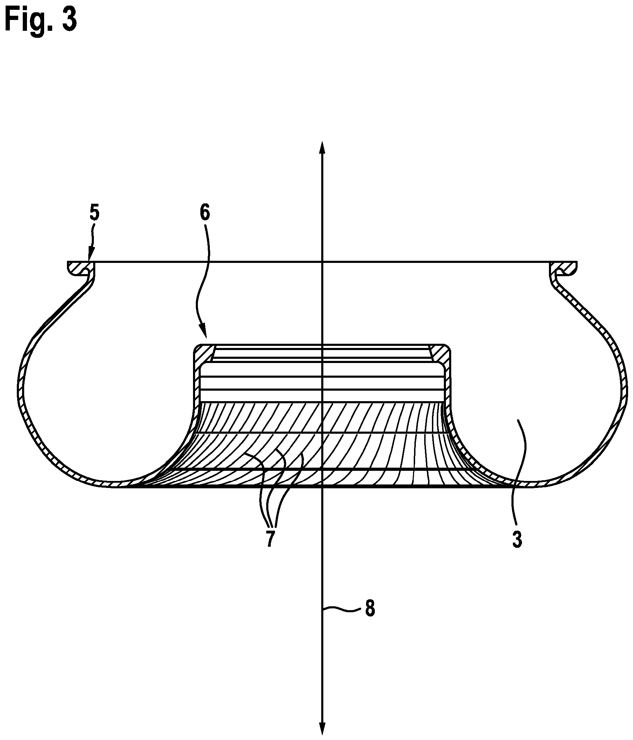

Die Fig. 2 zeigt den Luftfederbalg 3 aus elastomerem Material in einer Ansicht als Einzelteil. Der Luftfederbalg 3 ist an seinen Balgenden 5 und 6, dargestellt in dem entsprechenden Schnitt des Luftfederbalgs gemäß Fig. 3, mit Hilfe von hier nicht näher dargestellten Anschlussteilen, nämlich Luftfederdeckel und Felge, zwischen dem Wagenkasten bzw. der Karosserie eines Schienenfahrzeuges und dem Fahrschemel eingespannt, also zwischen gefederter und ungefederter Masse. Beim Einfedern wird der Luftfederbalg 3 in einer Rollbewegung verformt, wölbt sich aus und legt sich mehr oder weniger an die Anschlussteile an.

Der Luftfederbalg 3 weist mindestens auf Teilen und seiner Außenoberfläche, hier etwa in den unteren zwei Dritteln und im oberen Viertel, eine von einer im Wesentlichen glatten Oberfläche sich unterscheidende Struktur auf, nämlich eine Vielzahl von aus der Oberfläche hervortretenden und über die Außenoberfläche hinweg bogenförmig verlaufenden Rippen 7.

Die Anordnung der bogenförmig verlaufenden Rippen 7 zueinander und zur Achse 8 des Luftfederbalgs ist so, dass bei Vorhandensein von Flüssigkeit auf der Außenoberfläche Fliess- oder Strömungsverhältnisse entstehen, durch die an der Außenoberfläche anhaftende Fremdstoffe oder Verschmutzungen durch die Flüssigkeit ausschwemmbar sind.

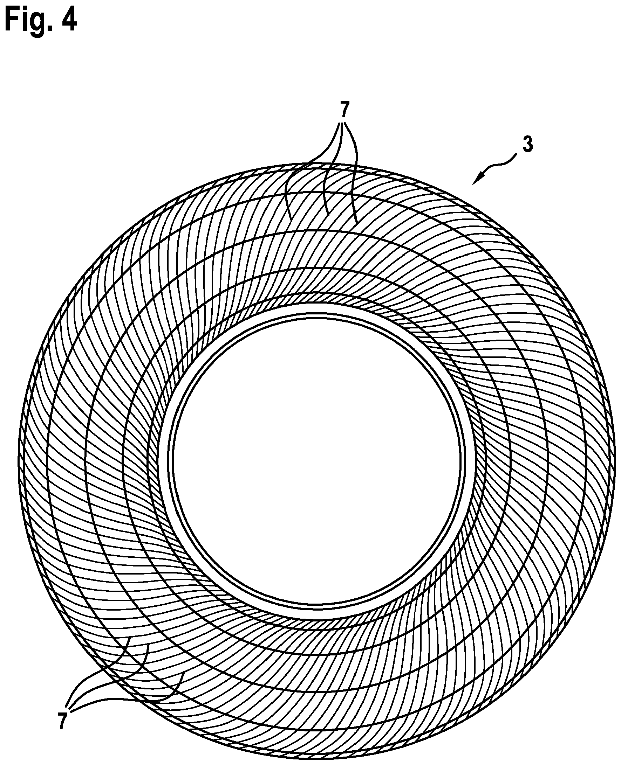

Die bogenförmig verlaufenden Rippen 7 sind gleichsinnig ausgerichtet und bilden nebeneinander liegend Kanalquerschnitte. Die Rippen 7 und damit auch die zwischen ihnen eingeschlossenen Kanalquerschnitte erstrecken sich bogenförmig geneigt zur Umfangsrichtung des Luftfederbalgs, wie die Fig, 2 bis 4 in der Zusammenschau verdeutlichen. Fig. 4 zeigt dabei den erfindungsgemäßen Luftfederbalg der Fig. 2 und 3 in einer Ansicht von unten.

Anhand des in der Fig. 2 dargestellten Halbbalgs wird außerdem deutlich, dass die bogenförmig verlaufenden Rippen 7 im Bereich der Anlage des Balgs an die Anschlussteile angeordnet sind und der Luftfederbalg in einem im Wesentlichen im Zenit des Balgs befindlichen Bereich 11 von Rippen frei ist. Dieser Bereich dient dann auch der Kennzeichnung/B eschriftung.

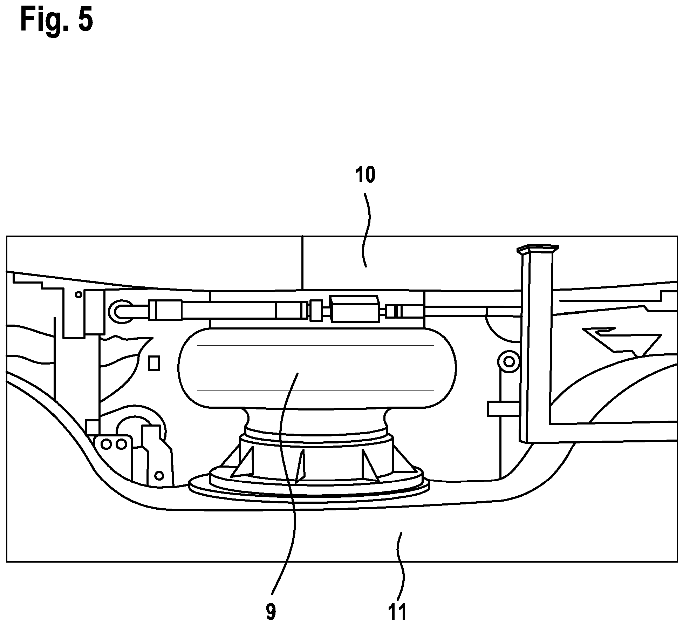

Zur Verdeutlichung des Unterschiedes zum Stand der Technik zeigt die Figur 5 noch einmal einen Luftfederbalg 9 mit glatter Oberfläche aus dem Stand der Technik, der zwischen einem Wagenkasten 10 und einem Fahrschemel 2 eingebaut ist.

### Bezugszeichenliste

### (Teil der Beschreibung)

- 1: Kurzstreckentriebwagen
- 2: Fahrschemel bzw. Fahrgestell
- 3: Luftfederbalg, erfindungsgemäß
- 4: Karosserie
- 5: Balgende
- 6: Balgende
- 7: bogenförmig verlaufende Rippe
- 8: Achse des Luftfederbalgs
- 9: Luftfederbalg, Stand der Technik
- 10: Wagenkasten, Karosserie
- 11: im Zenit des Balgs befindlicher Bereich

## Patentansprüche

1. Luftfederbalg (3) aus elastomerem Material, der an seinen Balgenden (5, 6) mit Hilfe von Anschlussteilen zwischen gefederter und ungefederter Masse (4, 2) eingespannt ist und beim Ein- bzw. Ausfedern Rollbewegungen ausführt und/oder sich an Anschlussteile anlegt, wobei der Luftfederbalg (3) mindestens auf Teilen seiner Außenoberfläche eine von einer im Wesentlichen glatten Oberfläche sich unterscheidende Struktur aufweist, wobei die Struktur eine Vielzahl von aus der Oberfläche hervortretenden und über die Außenoberfläche hinweg bogenförmig verlaufenden Rippen (7) enthält, die in ihrer Anordnung nebeneinander liegend Kanalquerschnitte bilden und zur Achse (8) des Luftfederbalges gleichsinnig so ausgerichtet sind, dass bei Vorhandensein von Flüssigkeit auf der Außenoberfläche Fließ- oder Strömungsverhältnisse entstehen, durch die an der Außenoberfläche anhaftende Fremdstoffe oder Verschmutzungen durch die Flüssigkeit ausschwemmbar sind, **dadurch gekennzeichnet, dass** die Rippen (7) und damit die
Kanalquerschnitte sich bogenförmig geneigt zur Umfangsrichtung des Luftfederbalgs (3) erstrecken und einen Neigungswinkel von 30° bis 60° zwischen der Tangente an einen jeweiligen Bogen und Umfangsrichtung aufweisen, und wobei die bogenförmig verlaufenden Rippen (7) im Bereich der Anlage des Balgs an die Anschlussteile angeordnet sind und der Luftfederbalg in einem im Wesentlichen im Zenit des Balgs befindlichen Bereich von Rippen frei ist.

2. Luftfederbalg nach Anspruch 1, bei dem die bogenförmig verlaufenden Rippen (7) Unterbrechungen aufweisen, insbesondere kreuzende Rillen, die mehrere nebeneinander liegende Kanalquerschnitte miteinander verbinden.

3. Luftfederbalg nach einem der Ansprüche 1 oder 2, bei dem die bogenförmig verlaufenden Rippen (7) abhängig von ihrer Position auf der Außenoberfläche des Luftfederbalgs eine unterschiedliche Breite und/oder Höhe aufweisen.

4. Luftfederbalg nach Anspruch 3, bei dem die bogenförmig verlaufenden Rippen (7), vorzugsweise eine Breite 0,5 bis 2 mm und eine Höhe von 0,3 bis 1,5 mm aufweisen.

5. Verwendung eines Luftfederbalgs nach einem der Ansprüche 1 bis 4 für die Luftfederung von Schienenfahrzeugen oder Lastkraftwagen.

## Claims

1. Air spring bellows (3) made of elastomeric material, which is clamped in place at its bellows ends (5, 6) with the aid of connection parts between a sprung and an unsprung mass (4, 2) and carries out rolling movements during compression and extension and/or bears against connection parts, wherein the air spring bellows (3) has, at least on parts of its outer surface, a structure other than a substantially smooth surface, wherein the structure contains a multiplicity of ribs (7) protruding from the surface and extending arcuately across the outer surface, said ribs (7) forming, in their arrangement, channel cross sections located alongside one another and being oriented in the same direction with respect to the axis (8) of the air spring bellows such that, when liquid is present on the outer surface, flow conditions arise, as a result of which foreign matter or dirt sticking to the outer surface is able to be flushed out by the liquid, **characterized in that** the ribs (7) and thus the channel cross sections extends in an arcuately inclined manner with respect to the circumferential direction of the air spring bellows (3) and exhibit an inclination angle of 30° to 60° between the tangent to a respective arc and the circumferential direction, and wherein the arcuately extending ribs (7) are arranged in the region of the contact of the bellows with the connection parts and the air spring bellows does not have ribs in a region located substantially at the top of the bellows.

2. Air spring bellows according to Claim 1, wherein the arcuately extending ribs (7) have interruptions, in particular crossing grooves, which connect together a plurality of channel cross sections located alongside one another.

3. Air spring bellows according to either of Claims 1 and 2, wherein the arcuately extending ribs (7) have different widths and/or heights depending on their position on the outer surface of the air spring bellows.

4. Air spring bellows according to Claim 3, wherein the arcuately extending ribs (7) preferably have a width of 0.5 to 2 mm and a height of 0.3 to 1.5 mm.

5. Use of an air spring bellows according to one of Claims 1 to 4 for the air suspension of rail vehicles or trucks.

## Revendications

1. Soufflet pneumatique (3) en matériau élastomère qui est monté au niveau de ses extrémités de soufflet (5, 6) à l'aide de deux pièces de raccordement entre une masse suspendue et une masse non suspendue (4, 2) et effectue des mouvement de roulis lors de sa compression ou de sa détente, et/ou s'applique contre des pièces de raccordement, le soufflet pneumatique (3) présentant au moins sur certaines parties de sa surface extérieure une structure différente d'une surface substantiellement lisse, la structure comportant une pluralité de nervures (7) faisant saillie de la surface et s'étendant en forme d'arc au-delà de la surface extérieure, et qui forment par leur agencement des sections transversales de canal adjacentes et sont alignées dans le même sens par rapport à l'axe (8) du soufflet pneumatique de sorte qu'en présence d'un liquide sur la surface extérieure, des conditions de coulée ou d'écoulement apparaissent par lesquelles des corps étrangers ou impuretés adhérant à la surface extérieure peuvent être enlevés par le liquide,
**caractérisé en ce que** les nervures (7), et donc les sections transversales de canal, s'étendent en forme d'arc de manière inclinée par rapport à la direction circonférentielle du soufflet pneumatique (3) et présentent un angle d'inclinaison de 30° à 60° entre la tangente d'un arc respectif et la direction circonférentielle, et dans lequel les nervures (7) s'étendant en forme d'arc sont disposées au niveau de l'application du soufflet contre les pièces de raccordement, et le soufflet pneumatique étant exempt de nervures dans la zone se trouvant substantiellement au zénith du soufflet.

2. Soufflet pneumatique selon la revendication 1, dans lequel les nervures (7) s'étendant en forme d'arc présentent des interruptions, en particulier des rainures qui se croisent, qui relient plusieurs sections transversales de canal adjacentes.

3. Soufflet pneumatique selon l'une quelconque des revendications 1 ou 2, dans lequel les nervures (7) s'étendant en forme d'arc présentent une largeur et/ou une hauteur différente(s) en fonction de leur position sur la surface extérieure du soufflet pneumatique.

4. Soufflet pneumatique selon la revendication 3, dans lequel les nervures (7) s'étendant en forme d'arc présentent de préférence une largeur de 0,5 à 2 mm et une hauteur de 0,3 à 1,5 mm.

5. Utilisation d'un soufflet pneumatique selon l'une quelconque des revendications 1 à 4 pour la suspension pneumatique de véhicules ferroviaires et de poids lourds.
